# EUROPÄISCHE PATENTANMELDUNG

(11) **EP 2 595 121 A1**
(43) Veröffentlichungstag der Anmeldung: **22.05.2013**
(21) Anmeldenummer: 12192472.4
(22) Anmeldetag: 13.11.2012
(51) Int. Cl.: G07F 7/08, G06Q 20/40, G06Q 20/34

(54) **Erfindung betreffend Sicherheitsprodukte, insbesondere Bank- oder Identitätskarten**

(30) Priorität: 14.11.2011 EP 11189066
(71) Anmelder: Technische Hochshule Mittelhessen, 35390 Giessen (DE)
(72) Erfinder: Behrens, Michael, 61231 Bad Nauheim (DE)
(74) Vertreter: Stumpf, Peter

(57) **Zusammenfassung**

Die vorliegende Erfindung betrifft ein neuartiges Sicherheitsprodukt, sowie dessen Herstellung, sowie ein zugehöriges Lesegerät und zugehöriges Betriebsverfahren zur Überprüfung der Nutzungsberechtigung oder Identität des Trägers des neuartigen Sicherheitsproduktes.

## Beschreibung

Bankkarten wie auch Identitätskarten sind seit vielen Jahren im alltäglichen Gebrauch. Oft besteht der Wunsch, zu überprüfen inwieweit der Kartenbesitzer auch die legitimierte Person ist, die auf der Karte angegeben ist. Zumeist erfolgt eine automatisierte Authentisierung einer Person durch die Abfrage eines Geheimnisses, etwa in Form einer PIN oder eines Passwortes. Eine weitere Möglichkeit besteht in der Nutzung einer Personenverifikation über den Vergleich biometrischer Merkmale, wie dem Gesicht, Fingerabdrücken, Handvenen und noch vieler anderer. Der Vergleich erfolgt zwischen den sogenannten Live - Merkmalen der zu verifizierenden Person und gespeicherten vertrauenswürdigen Abbildungen. Bei gemessener Ähnlichkeit oberhalb einer einstellbaren Schwelle ist die Person akzeptiert. Die zu speichernden Datenmengen betragen je nach Realisierung zwischen 300 Bytes und etwa 2 MByte, als typisch kann ein Wert um die 5 KByte angesehen werden. Die dieser Erfindung zugrundeliegende Idee ist, zu einer bereits bestehenden Identitätskarte (Bankkarte, Kreditkarte, Personalausweis o.ä. Sicherheitsprodukten) eine Hülle oder weitere Schicht zu schaffen, die ein Datenfeld enthält, dass zusätzliche Sicherheitsmerkmale enthält, die eine sichere Identifikation der die Identitätskarte nutzenden Person erlaubt. Die Hülle wird mechanisch und mathematisch an die ID Karte angepasst. Das Datenfeld, dass sehr preiswert hergestellt werden kann, wird durch die Konstruktion der Hülle gut vor Verschmutzung, Abnutzung, Sonnenlicht und elektromagnetischen oder elektrostatischen Einflüssen geschützt. Ein RFID - Chip als Bestandteil der ID - Karte kann ebenfalls gegen unbefugtes und unkontrolliertes Auslesen geschützt werden.

### Beschreibung

### Stand der Technik

Im Stand der Technik sind zahlreiche Ausführungen von Identitätskarten oder Bankkarten bekannt. Es existieren auch zahlreiche Normen zur Herstellung von solchen Karten.

Als Hüllen zum Schutz von Sicherheitsdokumenten, wie etwa Ausweisen und zur Unterstützung der Überprüfung, ob der Träger des Sicherheitsdokumentes der berechtigte Inhaber ist, ist aus der DE 94 16 543 U1 ein Dauerfahrausweis mit einer Kunststoffhülle bekannt, wobei die Hülle so ausgeführt ist, dass in diese - nachträglich- ein Lichtbild des berechtigten Inhabers eingefügt werden kann. Damit kann dann einem Schaffner der optische Vergleich des Trägers des Dokumentes mit dem Lichtbild auf dem Dokument erleichtert werden.

### Nachteile im Stand der Technik

Jedoch weisen die bekannten Verfahren zur Überprüfung der Träger- oder Nutzerberechtigung den Nachteil auf, dass das Sicherheitsprodukt leicht manipulierbar ist. Etwa durch einfaches kopieren eines oder mehrere der Vergleichsmerkmale auf dem Sicherheitsprodukt.

### Aufgabe

Es ist **Aufgabe** der Erfindung, die vorgenannten Nachteile im Stand der Technik zu beseitigen oder zumindest zu mindern.

### Lösung der Aufgabe

Diese Aufgabe wird durch gelöst durch ein Sicherheitsdokument mit den Merkmalen des Anspruch 1, welches im Folgenden u.a. auch CardSafe genannt wird, sowie durch ein Verfahren zur Herstellung und ein Betriebsverfahren für solch ein erfindungsgemäßes Sicherheitsdokument.

Den Kern der Erfindung bildet die Kombination eines üblichen Sicherheitsproduktes mit einem weiteren Datenfeld entweder direkt auf dem Sicherheitsprodukt, etwa in der gleichen oder einer anderen Schicht des mindestens einen schon bestehenden Datenfeldes oder auf einer zum Sicherheitsprodukt korrespondierenden Hülle oder weiteren, korrespondierenden Schicht.

Erfindungsgemäß erlaubt dieses weitere Datenfeld, einen Livevergleich zur Berechtigungsüberprüfung des Trägers des Produktes während einem Nutzungsvorgang und zwar auf der Basis von biometrischen Daten des Trägers.

Das weitere Datenfeld selber, weist dabei keinerlei biometrische Daten auf, sondern lediglich von denen des berechtigten Inhabers des Produktes abgeleitete biometrische Daten. Bei der Ableitung der biometrischen Daten wird erfindungsgemäß eine "Falltür-Funktion" genutzt, um zu vermeiden oder stark einzuschränken, dass von den abgeleiteten biometrischen Daten wieder auf die echten biometrischen Daten -des einzig berechtigten Trägers- zurück geschlossen werden kann.

### Ausführungsbeispiele

Erfindungsgemäß wird dazu folgendes zweistufiges Verfahren vorgeschlagen:

### 1. Prozessablauf: Erfassung, Registrierung und Verschlüsselung des Biometrischen Datensatzes

1.1 Biometrische Daten der Person, für die ein CardSafe erstellt werden soll, werden durch einen Life Scanner erfasst. Dies kann im Beispiel etwa ein Fingerprint Sensor sein, der ein Abbild eines Fingers dieser Person erstellt. Daraus entsteht ein erster Biometrie Datensatz. Dieser Datensatz wird eventuell noch weiter aufbereitet und komprimiert. In der Literatur wird dieser überarbeitete Datensatz dann oft als Template bezeichnet. (Details zu Abläufen und Vorgängen biometrischer Identifikation finden sich z.B. in M. Behrens, R. Roth (Hrsg.), Biometrische Identifikation, Wiesbaden (2001)) Je nach Ausführung besteht der biometrische Datensatz aus wenigen Bytes bis zu MBytes. Typisch sind Werte von 500 Bytes bis zu 5 kBytes für Templates.
1.2 In einem weiteren Feld können Informationen (1) zu der verwendeten biometrischen Identifikationsmethode (2) zu dem verwendeten Sensor (3) Datum und Ort der Erfassung (4) zu der erfassenden Institution (5) zu der erfassenden Person (6) Information über die verwendete Komprimierung der biometrischen Daten (7) Information über das erfasste Objekt bzw. Körperteil (8) Qualitätshinweise (9) eine laufende Registrierungsnummer oder nur Teile davon sein. Beispiel: (1) Fingerprint Recognition (2) YYY2000 der Firma XXX (3) Friedberg 2011 08 13 (4) THM (5) M. Behrens (6) Template Minutien Methode zz (7)Index Finger Right (8) 500 dpi (9) 234234234.
1.3 Dieser Datensatz wird gegebenenfalls noch um weitere personenbezogene Daten ergänzt, wie z.B. Namen, Wohnort, Arbeitgeber, Konto oder was erforderlich ist. Alternativ kann hier auch eine reine Identifikationsnummer wie z.B. die MAC Kennung einer Smartcard stehen. Der spezifische Inhalt des ergänzenden Datensatzes ist nicht Kern der Erfindung sondern lediglich ein weiteres, vorteilhaftes Ausführungsbeispiel.
1.4 Der unter 1.1. erwähnte Datensatz oder die durch die Maßnahmen unter 1.2 oder/und 1.3 erwähnten, ergänzten Datensatz wird vorzugsweise um eine digitale Signatur ergänzt oder durch eine andere eine "Falltürfunktion" bildende Methode verändert. Digitale Signaturverfahren sind u.A. durch http://de.wikipedia.org/wiki/Digitale_Signatur bekannt. Vorzugsweise wird dabei eines der anerkannten Hashverfahren genutzt. Der private Schlüssel zu dieser Signatur wird einem Zertifikat des Signierers der biometrischen Daten entnommen, das z.B. auf der Webseite des Signierers oder auch auf dem CardSafe aufgedruckt sein kann. Das Zertikat des Signierers muss seinerseits von einer vertrauenswürdigen Ausgabestelle, einer entsprechenden Certication Authority ausgeben worden sein. Der Ablauf kann je nach Verfahren abweichen. So wird z. B. der Hashwert nicht bei allen digitalen Signaturverfahren bei der Verifikation rekonstruiert.
   Aus den zu signierenden Daten und dem privaten Signaturschlüssel wird durch eine eindeutige Rechenvorschrift die Signatur berechnet. Verschiedene Daten müssen mit an Sicherheit grenzender Wahrscheinlichkeit zu einer anderen Signatur führen, und die Signatur muss für jeden Schlüssel einen anderen Wert ergeben. Bei deterministischen digitalen Signaturverfahren ist die digitale Signatur durch die Nachricht und den Schlüssel eindeutig festgelegt, bei probabilistischen digitalen Signaturverfahren gehen Zufallswerte in die Signaturberechnung ein, so dass die digitale Signatur zu einer Nachricht und einem Schlüssel viele verschiedene Werte annehmen kann.
   Bei einer digitalen Signatur wird der private Schlüssel in der Regel nicht direkt auf die Nachricht angewendet, sondern auf deren Hash-Wert, der mittels einer Hashfunktion (wie z. B. SHA-1) aus der Nachricht berechnet wird. Um Angriffe zu verhindern, muss diese Hashfunktion kollisionsresistent sein, d. h. es muss praktisch unmöglich sein, zwei Nachrichten zu finden, deren Hash-Wert identisch ist.
   Soweit der öffentliche Schlüssel mittels eines elektronischen Zertifikats einer Person zugeordnet wurde, kann auf Grund dessen, dass es nur einen zum öffentlichen Schlüssel korrespondierenden privaten Schlüssel gibt, über das öffentliche Verzeichnis des Zertifizierungsdiensteanbieters (ZDA) die Identität des Signaturerstellers ermittelt bzw. überprüft werden. Die Gesamtheit der technischen Infrastruktur, mit der die Zertifikate und Informationen zu ihrer Gültigkeit erzeugt und öffentlich bereitgestellt werden, wird als PKI (Public Key Infrastructure) bezeichnet.
1.5 Der gesamte bisher beschriebene Datensatz oder einer der nach 1.4 abgeleitete Datensatz, ergänzt mit der digitalen Signatur, wird nun asymetrisch verschlüsselt. Dabei findet der öffentliche Schlüssel (Public Key) des später beschriebenen Lesegerätes, des Empfängers, Verwendung. Der Public Key wird hierbei bei einer ganzen Klasse von Geräten, z.B. Geldausgabeautomaten identisch gewählt. Selbstverständlich muss der Schlüssel gut genug sein, um einem Angriff durch Ausprobieren aller Möglichkeiten, einem sogenannten Brute Force Angriff, zu widerstehen. Dies ist z.B. nach derzeitigem Stand der Technik für einen 2048 Bit langen Schlüssel beim RSA Algorithmus der Fall (Literatur: https://www.bsi.bund.de/ContentBSl/grundschutz/kataloge/m/m02/m02164.html). In asymmetrischen Kryptosystemen benötigt der Sender für eine verschlüsselte Übermittlung den öffentlichen Schlüssel (Public Key) des Empfängers. Dieser könnte z. B. per E-Mail versendet oder von einer Web-Seite heruntergeladen werden. Dabei muss sichergestellt sein, dass es sich tatsächlich um den Schlüssel des Empfängers handelt und nicht um eine Fälschung eines Betrügers.
1.6 Sollten für unterschiedliche Lesegeräte bzw. Gruppen von Lesegeräten unterschiedliche Public Keys vorliegen, wird für jeden weiteren Public Key ein eigener Datensatz erstellt. Ebenso wird verfahren, wenn unterschiedliche biometrische Datensätze Verwendung finden.
1.7 Der gesamte verschlüsselte Datensatz bzw. die gesamten verschlüsselten Datensätze wird/werden nun auf den Datenträger übertragen.
1.8 Die laufende Nummer des Zertifikates wird registriert und mit Gültigkeitsdaten in geigneter Form hinterlegt. Dies erlaubt z.B. eine Revokation bzw. das für ungültig erklären eines Datensatzes. Zu beachten ist, dass dazu keine personenbezogenen Daten aufbewahrt werden müssen.
1.9 Nach Herstellung des Datenträgers können alle personenbezogenen Daten vernichtet oder dem Eigentümer ausgehändigt werden. Dadurch können auch umfangreichste Forderungen des Datenschutzes eingehalten werden.
1.10 Besonders hervorzuheben ist, dass die biometrischen Daten nur durch Menschen zur erfolgreichen Verifikation seiner Identität genutzt werden können, der auch die dazugehörigen Merkmale hat, also z.B. den dazugehörigen Zeigefinger und dass die Daten ausschliesslich durch Geräte entschlüsselt werden können, die über den zu dem bei der Verschlüsselung verwendeten Public Key genau zugehörigen Secret Key gehören. Die Geheimhaltung des Secret Key sichert die Geheimhaltung des Dateninhaltes. Bei Kompromitierung des geheimen Entschlüsselungsschlüssels, des Secret Keys, ist je nach Anwendung eine Neuverschlüsselung mit einem neuen Secret Key erforderlich. Eine Totalfälschung erfordert den Besitz des privaten Schlüssels des Signierers der biometrischen Daten. Bei dem hier vorgestellten Ablauf kann kein Gewinn aus einer digitalen Kopie des verschlüsselten Datensatzes gezogen werden, solange die Verschlüsselungsverfahren selbst nicht überwunden worden sind.

### 2 Prozessablauf Teil 2: Verifizierung einer Identität aufgrund der biometrischen Daten, gelesen von einem Datenfeld eines CardSafes

2.1 Zu Beginn dieses Prozeßabschnittes liest ein Lesegerät den dieses Lesegerät betreffenden Abschnitt des Datenfeldes des CardSafes
2.2 Unter Verwendung des (geheimen) Secret Keys der Leseeinheit wird der Dateninhalt entschlüsselt. Die digitale Signatur wird abgetrennt. Durch Verwendung des Public Keys des Erstellers des Datensatzes wird die Signatur entschlüsselt. Falls das gelingt, ist Ersteller verifiziert. Der Hashwert wird aus der Signatur ausgelesen und mit dem Hashwert verglichen, der nach Anwendung des entsprechenden Algorithmus auf den entschlüsselten Datensatz erzielt wird. Ist er identisch, ist der Datensatz unverfälscht und unbeschädigt.
2.3 Der Datensatz mit dem biometrischen Merkmal wird abgetrennt.
2.4 Die Person wird gebeten, einen Life Scan des biometrischen Merkmals zu unterstützen. Beispiel: Bitte legen Sie Ihren Finger auf das Sensorfeld.
2.5 Der Life Scan wird mit dem gespeicherten Merkmal bzw. dem gespeicherten Template verglichen. Bei ausreichender Ähnlichkeit ist die Personenidentifikation positiv abgeschlossen.
2.6 Das Lesegerät kann dann z.B. mit einem Single Sign On Passwort - einem Einmalpasswort- ein weiteres Gerät autorisieren, eine vorgegebene Position auszuführen, z.B. ohne einen weiteren PIN Geld an einem Geldausgabeautomaten auszuzahlen
2.7 Eventuell ist dabei die Kartennummer, eine MAC Adresse oder eine vergleichbare Nummer zur Anbindung an eine weitere - im Beispiel etwa Bankkarte - notwendig
2.8 Das Lesegerät sollte als Vollautomat arbeiten und keinerlei biometrische Daten speichern.
   Eine bevorzugte Ausführungsform des erfindungsgemäßen Verfahrens sieht vor, dass mehrere, unterschiedliche biometrische Daten, wie etwa ein zweiter Fingerabdruck und/oder eine Irisabbildung und/oder weitere biometrische Daten gemäß dem obigen Verfahren abgeleitet und ebenfalls auf dem gleichen oder einem weiteren, zusätzlichen Datenfeld abgelegt oder signiert werden.
   In besonders bevorzugte Ausführungsform sieht vor, dass mehrere biometrische Daten einzeln und dann deren abgeleitete oder signierte Daten wiederum signiert werden, etwa durch mehrfache Anwendung einer sogenannten Falltürfunktion.
   Als ableitbare Biometrische Daten können Daten über ein oder mehrere Fingerbilder, Handgeometrie, Irisdaten, Palm-Vein daten, Gesichtsdaten oder vergleichbare Daten herangezogen werden.

Vorteilhafte Ausführungsformen der Erfindung werden in den Unteransprüchen offenbart.

Im Folgenden wird die Ausführungsform einer dem Sicherheitsprodukt zugeordneten Hülle beschrieben.

Erfindungsgemäß sieht eine erste Ausführungsform einer erfindungsgemäßen Hülle vor, dass diese in einer definierten räumlichen Anordnung zum Sicherheitsprodukt angeordnet ist. Bei Veränderung dieser Anordnung zum Sicherheitsprodukt ist ein erstes Indiz für eine Manipulation gegeben. Solch eine Anordnung kann durch definierte Führung des Sicherheitsproduktes in der Hülle, etwa mit einem definierten minimalen und maximalen Abstand ausgeführt sein. Dabei kann das oben beschriebene, zu den auf dem Sicherheitsprodukt ohnehin vorhandenen Datenfeldern hinzu kommende, erfindungsgemäße, weitere Datenfeld in, auf oder im Zwischenraum zwischen der Hülle oder auf dem Sicherheitsprodukt angeordnet sein.
In einer bevorzugen Ausführungsform besteht die erfindungsgemäße Hülle für das Sicherheitsprodukt aus
A. Einer Trägerplatte (1) mit einem Rahmen (2), welcher auf die Trägerplatte a) aufgeklebt, b) aufgeschweißt, c) Laminiert, d) aufgeklickt ausgeführt sein kann. Die Trägerplatte weist eine Vertiefung (3) auf, welche durch 1) Fräsen, 2) Ätzen, 3) Laserbrennen oder 4) Prägung erzeugt sein kann. Die Verfiefung (3) dient der Aufnahme eines Datenträger oder Datenfelds (4), auf welchem die oben erwähnten, aus biometrischen Daten des berechtigten Inhabers abgeleiteten Daten hinterlegt sind. Der Rahmen (2) kann entweder mit einer Führung zur Aufnahme des Sicherheitsproduktes oder zur Aufnahme einer Zwischenlage zum erweiterten Schutz durch Abdeckung des Datenfeldes (4) ausgeführt sein. Besonders bevorzugt ist eine metallische Zwischenlage (5). Alternativ kann eine schützende, vorzugsweise metallische Zwischenlage (5') auch unterhalb der Trägerplatte vorgesehen sein. Die Zwischenlage oder-lagen können auch begrenzt auf die Größe des Datenfeldes ausgeführt sein. Die schützende Zwischenlage dient als Abschirmung z.B. für einen RFID Chip, der sich zum Beispiel auf einer Karte befinden kann, die im CardSafe gesichert wird. Die Zwischenlage kann auch ausgeführt sein, als
   - Schutz gegen Schädigung durch elektrostatische Entladung
   - Schutz gegen zu starke Aufheizung durch Sonnenlicht
   - Schutz für einen optischen Datenspeicher, etwa gegen Ausbleichung.

In einer weiteren Ausführungsform umhüllt die erfindungsgemäße Hülle das darin einführbare Sicherheitsprodukt auch auf seiner Oberseite durch eine dafür vorgesehene Deckplatte (6). In diesem Fall dient der auf der Trägerplatte angebrachte Rahmen auch als Abstandshalter zur Deckplatte. Die Deckplatte kann je nach Ausbildung des zusätzlichen Datenspeichers oder Datenfeldes und Anordnung in der Hülle oder auf dem Sicherheitsprodukt optisch transparent oder mit einer Ausnehmung versehen ausgeführt sein. Somit wird ein in der Hülle oder auf dem Produkt angebrachter Datenspeicher oder Datenfeld nur bei definierter Verschiebung oder Entnahme des Sicherheitsproduktes für eine Lesevorrichtung zugänglich. Die gesamte Deckplatte oder nur der Teil der Abdeckung des zusätzlichen Datenspeichers oder Datenfeldes kann auch als optischer Filter, wie Polfilter, Farbfilter, Sperrfilter für alle möglichen Spektralbereiche elektromagnetischer Strahlung ausgeführt sein.

Darüber hinaus kann die Hülle -ebenfalls in den folgenden Zeichnungen nicht dargestellt- einen Verschlussmechanismus aufweisen. Vorzugsweise ist dieser so ausgeführt, dass der Datenspeicher oder das Datenfeld bei gewaltsamer Öffnung der Hülle für eine Verifikation des Trägers des Sicherheitsproduktes unbrauchbar wird.

Die Abmessungen der Hülle oder der Trägerplatte samt Rahmen können zur Aufnahme oder Führung einer Karte nach ISO ISO/IEC 7810 ausgeführt sein. Vorzugsweise weist die Trägerplatte und im Falle des Vorhandenseins einer Deckplatte mindestens eine Aussparung am einem Rand auf, die ein manuelles Entnehmen einer in den CardSafe eingeschobenen Karte. Diese Aussparung erlaubt -in einem weiteren Ausführungsbeispiel ebenfalls ein Entnehmen der eingeschobenen Karte durch einen mechanischen Greifer, der mit einer Zugvorrichtung zum Transport der eingeschobenen Karte kombiniert ist.

Die Aussparung kann mit der entsprechenden Aussparung der Deckplatte korrespondieren, um die Funktionalitäten noch weiter zu erhöhen. Dies geschieht zum Beispiel durch eine deckungsgleiche Ausformung der Aussparung.

Wenigstens durch die komplette Entnahme der eingeschobenen Karte wird der Zugriff auf den ansonsten verdeckt liegenden, zusätzlichen Datenspeicher oder auf das zusätzliche Datenfeld möglich.

Das erfindungsgemäße Datenfeld oder der Datenspeicher kann a) optischer oder/und b) magnetisch oder/und kapazitiv lesbarer ausgeführt sein. Vorzugsweise ist das Datenspeicher odeausgeführt sein.

Der Datenträgerspeicher muss dabei mindestens nach obigem Verfahren abgeleitete Daten aufweisen, die eine biometrische Verifikation einer Personenidentität erlauben.

Die Daten können als fotografisches Abbild oder als direkt an das verwendete Verfahren angepasste Daten, sogenannte Templates sein. Letzere können sowohl in einer einem ISO Standard entsprechenden Form als auch in firmenspezifischer Norm dargestellt sein. Die Daten können komprimiert dargestellt sein, z.B. Fotos in der Form von JPEG Dateien. Eine notarielle Beglaubigung der Daten durch ein Zertifikat oder die Anbindung an die Karte durch ein Zertifikat kann ebenfalls vorgesehen sein, um die Manipulationsmöglichkeiten weiter zu reduzieren.

Nachfolgend wird die Erfindung anhand von Ausführungsbeispielen unter Bezug auf die Zeichnung näher erläutert. Es zeigen:

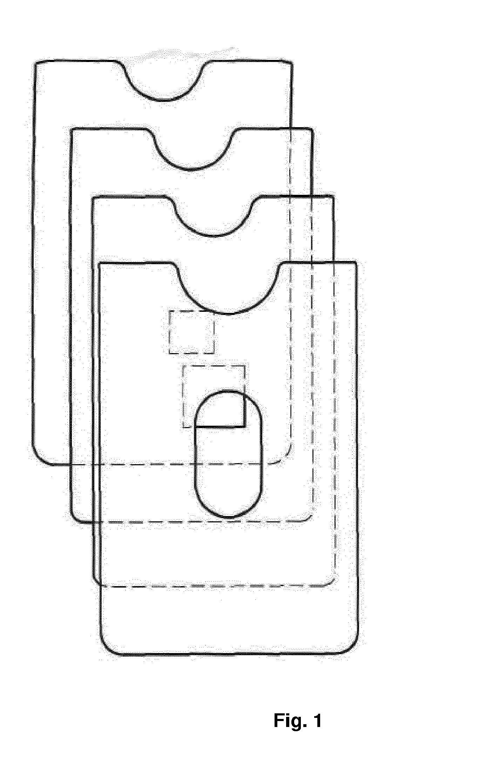

Fig. 1: Eine Hülle mit verschiedenen Ausnehmungen in einer Träger oder Deckplatte, sowie Aussparungen um den Zugang zum Sicherheitsprodukt zu erleichtern.

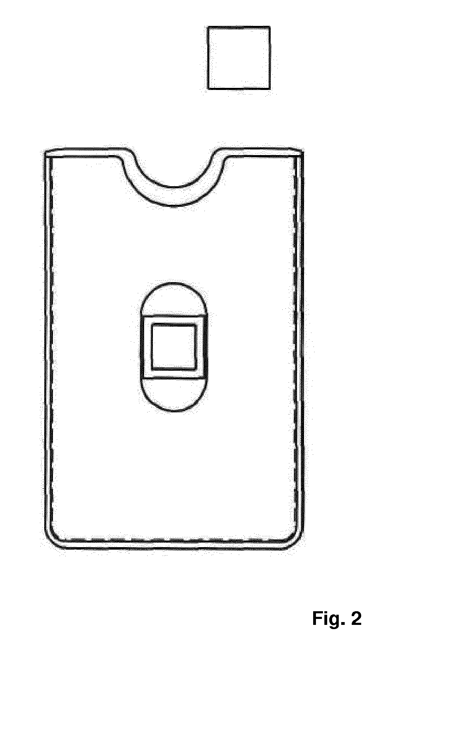

Fig. 2: Eine Hülle mit Träger- und Deckplatte, sowie quadratisch angedeutetem, zusätzlichen Datenspeicher.

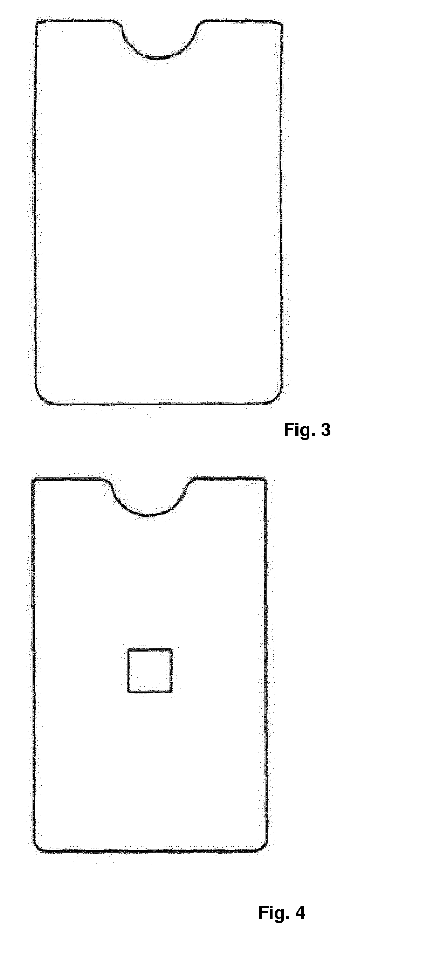

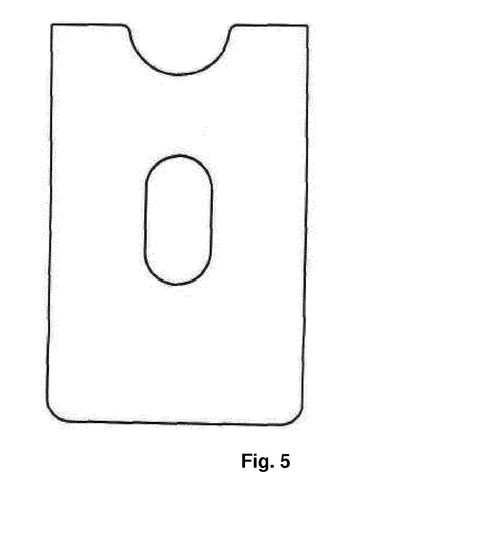

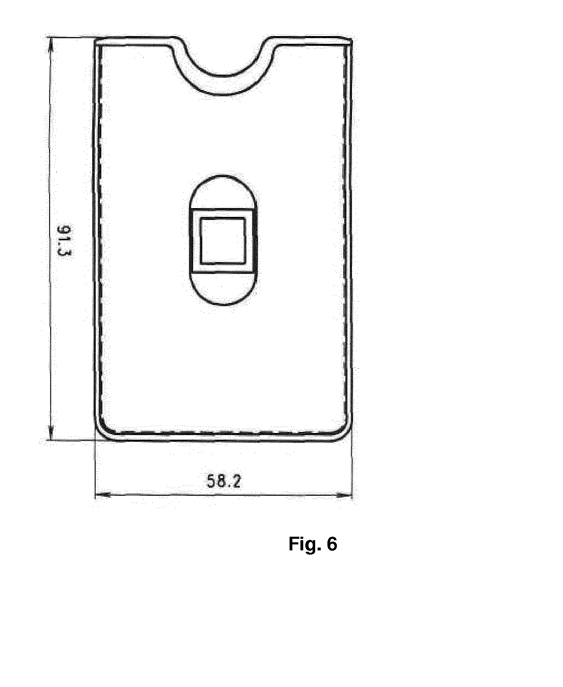

Fig. 3 bis 6: Draufsicht auf Hüllen mit oder ohne Ausnehmung, sowie mit Normmaß zur Aufnahme von genormten Sicherheitsprodukten.

Die in der vorstehenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein..

### Bezugszeichenliste

- 1: Trägerplatte
- 2: Rahmen
- 3: Vertiefung
- 4: Datenspeicher, -träger oder -feld
- 5,5': Zwischenlage, metallische Zwischenlage

## Patentansprüche

1. Sicherheitsprodukt aufweisend mindestens einen Datenspeicher zur Identifikation des Trägers, insbesondere Bank- oder Kreditkarten, **dadurch gekennzeichnet, dass** dieses Sicherheitsprodukt mindestens ein zusätzliches Datenfeld oder zusätzlichen Datenspeicher aufweist, welches oder welcher entweder auf dem Sicherheitsprodukt oder/und in einer diesem zugeordneten Hülle oder einem Zwischenraum zwischen Produkt und Hülle angeordnet ist und wobei das mindestens eine Datenfeld oder der mindestens eine Datenspeicher mindestens solche Daten enthält, welche durch Ableitung von biometrischen Daten des berechtigten Inhabers des Produktes abgeleitet ausgeführt sind.

2. Sicherheitsprodukt nach Anspruch 1, **dadurch gekennzeichnet, dass** die Daten des mindestens einen zusätzlichen Datenspeichers oder -felds durch Nutzung einer Falltürfunktion aus biometrischen Daten des berechtigten Inhabers abgeleitet ausgeführt sind.

3. Verfahren zur Herstellung eines Sicherheitsproduktes nach einem der Ansprüche 1 oder 2, **gekennzeichnet durch** die folgenden Schritte:
a) Aufnahme von biometrischen Daten des berechtigten Inhabers des Produktes
b) Ergänzung der Daten aus a) um eine digitale Signatur **durch** eines der bekannten Verfahren
c) Anwendung einer Falltürfunktion nach den bekannten Verfahren dafür zur Verschlüsselung mindestens des Datensatzes nach a) oder b)
d) Übertragung des so verschlüsselten Datensatzes auf ein Sicherheitsprodukt nach Anspruch 1 oder 2.

4. Verfahren nach Anspruch 3, **dadurch gekennzeichnet, dass** Schritt a) für mehrere, verschiedene biometrische Daten wiederholt wird und die nachfolgenden Schritte auf alle diese Daten parallel angewendet werden.

5. Verfahren nach Anspruch 3 oder 4, **dadurch gekennzeichnet, dass** Schritt b) oder und c) mehrfach hintereinander auf mindestens zwei biometrisch unterschiedliche Merkmale und daraus abgeleitete Daten, wie etwa Finger- und Iris-Merkmale, angewendet werden.

6. Lesegerät, geeignet zum Lesen eines Sicherheitsprodukts nach einem der Ansprüche 1 oder 2.

7. Betriebsverfahren zur Überprüfung der Nutzerberechtigung oder Identität eines Trägers eines Sicherheitsproduktes nach Anspruch 1 oder 2, **dadurch gekennzeichnet, dass**
das Verfahren aus biometrischen Daten des berechtigten Inhabers abgeleitete Daten gemäß einem der Ansprüche 3 bis 5 während oder unmittelbar nach dem Lesen dieser Daten mit biometrischen oder daraus abgeleiteten Daten des Nutzers vergleicht.
